# EUROPEAN PATENT APPLICATION

(11) **EP 1 863 298 A1**
(43) Date of publication of application: **05.12.2007**
(21) Application number: 07010625.7
(22) Date of filing: 29.05.2007
(51) Int. Cl.: H04Q 7/22, H04Q 7/38, H04M 3/436

(54) **Cellular phone system, video-phone call control device, cellular phone and video-phone call control method**

(30) Priority: 29.05.2006 JP 2006148828
(71) Applicant: NTT DoCoMo, Inc., Chiyoda-ku Tokyo 100-6150 (JP)
(72) Inventor: Fujii, Nobuhiro, Chiyoda-ku Tokyo 100-6150 (JP); Kanauchi, Masashi, Chiyoda-ku Tokyo 100-6150 (JP)
(74) Representative: GROSSE BOCKHORNI SCHUMACHER

(57) **Abstract**

An object of the present invention is to allow a cellular phone to establish a video-phone call even when there is an incoming video-phone call during the packet communications. The cellular phone system comprises a cellular phone and the Mobile Multimedia Switching Center (MMS). The MMS comprises a call type judgment section that judges, when a call request is made to the cellular phone, whether the call request is for a video-phone call; a communication status judgment section that judges whether the cellular phone is performing packet communications; and an adding section that adds call information to the effect that the call request is for a video-phone call to an incoming call signal in cases where the call request is for a video-phone call and packet communications are being performed. The cellular phone comprises reporting means (DCF or the like) for judging whether call information has been added to the incoming call signal when the cellular phone is performing packet communications and for reporting that there has been an incoming video-phone call and establishment means (MTF and TAF (AV) and so forth) for establishing a video-phone call by disconnecting the packet communications.

## Description

### BACKGROUND OF THE INVENTION

### Field of the Invention

The present invention relates to a cellular phone system, a video-phone call control device, and a cellular phone and video-phone call control method.

### Related Background of the Invention

Conventionally, it has been possible to make a video-phone call by using a cellular phone (See Japanese Application Laid Open No. 2004-221738 and Japanese Application Laid Open No. 2004-120056, which are Japanese Patent Kokai publications, for example). When a video-phone call is made by means of a cellular phone, a call request is made by the cellular phone on the outgoing call side to the cellular phone on the incoming call side as in the case of a voice call and the incoming call signal of this call request is received by the cellular phone on the incoming call side, thereby establishing a video-phone call connection between the outgoing call-side cellular phone and the incoming call-side cellular phone.

### SUMMARY OF THE INVENTION

However, in cases where the incoming call-side cellular phone is performing packet communications when a call request for a video-phone call is made, the video-phone call connection cannot normally be established and, therefore, a video-phone call cannot be made. This is true for the following reasons. First, because the radio bearer constituting the signal transmission path differs for packet communications and video-phone calls, a radio bearer that is compatible with the particular type of communication is required to perform each type of communication. However, normally, a packet communication radio bearer and a video-phone call radio bearer cannot be established at the same time for one cellular phone on a cellular phone network. Furthermore, in accordance with standards for mobile communications, normally even when the incoming call-side cellular phone receives an incoming call signal for a video-phone call during packet communications, processing to not establish a connection for the video-phone call, that is, reject the telephone call, is executed without the user knowing that there has been an incoming video-phone call.

The present invention was conceived to solve the above problem and an object of the present invention is to provide a cellular phone system, a video-phone call control device, a cellular phone and a video-phone call control method that allow a video-phone call to be established even when there is an incoming video-phone call during packet communications by the cellular phone.

In order to achieve the above object, the cellular phone system according to the present invention is a cellular phone system constituted including a cellular phone having a video-phone call function and a packet communication function and a video-phone call control device contained in a cellular phone network which is a connection target of the cellular phone, wherein the video-phone call control device comprises: call type judgment means for judging, when a call request is made to the cellular phone, whether the call request is for a video-phone call; communication status judgment means for judging whether the cellular phone is performing packet communications; and adding means for adding call information to the effect that the call request is for a video-phone call to the incoming call signal pertaining to the call request transmitted to the cellular phone when judgment is made by the call type judgment means that the call request is for a video-phone call and when judgment is made by the communication status judgment means that the cellular phone is performing packet communications; and the cellular phone comprises: incoming call signal receiving means for receiving an incoming call signal pertaining to a call request to the cellular phone itself; reporting means for judging, when the cellular phone is performing packet communications, whether the call information has been added to the incoming call signal received by the incoming call signal receiving means and for reporting that there is an incoming video-phone call in cases where the call information has been added; and connection establishment means for accepting an input to the effect that a video-phone call that corresponds with the report issued by the reporting means is to be connected and establishing a connection for the video-phone call by disconnecting the packet communications in accordance with the input.

With the cellular phone system according to the present invention, in cases where, when a call request is made to the cellular phone, the call request is for a video-phone call and the cellular phone is performing packet communications, call information to the effect that a call request is for a video-phone call is added to the incoming call signal pertaining to the call request by the (video-phone call control device of the) cellular phone network. When an incoming call signal to which the call information has been added is received by the cellular phone, it is judged that there is an incoming video-phone call by referencing the call information (irrespective of the standards for mobile communications). As a result of this judgment, processing for the arrival of the video-phone call can be performed without disconnecting the packet communications and, in cases where there is an input to the effect that there is an incoming call for the video-phone call, a connection for a video-phone call is established by disconnecting the packet communications. In other words, with the cellular phone system according to the present invention, a video-phone call can be established even when there is an incoming video-phone call during packet communications.

The reporting means desirably reports that there has been an incoming call when settings have been made beforehand to handle a video-phone call during packet communications. With this constitution, a video-phone call can be established when there is an incoming video-phone call during packet communications only when such settings have been made beforehand.

In cases where settings have been made beforehand to transfer a video-phone call during packet communications or connect a video-phone call during packet communications to an answerphone, the reporting means desirably transfers the incoming call signal or connects same to the answerphone. With such a constitution, when there is an incoming video-phone call during packet communications, the incoming video-phone call can be transferred or connected to an answerphone, whereby user friendliness can be improved.

The communication status judgment means desirably detects the type of the packet communications; and the adding means judges whether to add the call information in accordance with the type detected by the communication status judgment means. With this constitution, the interruption of packet communications due to the arrival of a video-phone call can be prevented for packet communications of a type for which packet communications are preferably not interrupted due to the arrival of a video-phone call.

The video-phone call control device desirably further comprises device type detection means for detecting the device type of the cellular phone; and the adding means desirably judges whether to add the call information in accordance with the device type detected by the device type detection means. With this constitution, processing can be performed for a cellular phone that is compatible with the functions of the present invention.

The call information is desirably a signal IE. With this constitution, the present invention can be reliably and easily effected.

The cellular phone system according to the present invention is constituted comprising a cellular phone and a video-phone call control device but the cellular phone and video-phone call control device in particular have new characteristics. In other words, the video-phone call according to the present invention is a video-phone call control device that is contained in a cellular phone network which is a connection target for a cellular phone having a video-phone call function and a packet communication function, comprising: call type judgment means for judging, when a call request is made to the cellular phone, whether the call request is for a video-phone call; communication status judgment means for judging whether the cellular phone is performing packet communications; and adding means for adding call information to the effect that a call request is for a video-phone call to an incoming call signal pertaining to the call request which is transmitted to the cellular phone in cases where judgment is made by the call type judgment means that the call request is for a video-phone call and judgment is made by the communication status judgment means that the cellular phone is performing packet communications.

The cellular phone according to the present invention is a cellular phone having a video-phone call function and a packet communication function, comprising: incoming call signal receiving means for receiving an incoming call signal pertaining to a call request to the cellular phone itself; reporting means for judging, when the cellular phone is performing packet communications, whether call information to the effect that the call request is for a video-phone call has been added to the incoming call signal received by the incoming call signal receiving means and for reporting that there is an incoming video-phone call in cases where the call information has been added; and connection establishment means for accepting an input to the effect that a video-phone call that corresponds with the report issued by the reporting means is to be connected and establishing a connection for the video-phone call by disconnecting the packet communications in accordance with the input.

Furthermore, in addition to being described as the invention of the cellular phone system as detailed hereinabove, the present invention can also be described in terms of the invention of the video-phone call control method as follows. This invention differs only in terms of the category and is substantially the same invention which affords similar action and effects.

In other words, the video-phone call control method according to the present invention is a video-phone call control method of a cellular phone system constituted including a cellular phone having a video-phone call function and a packet communication function and a video-phone call control device contained in a cellular phone network which is a connection target of the cellular phone, comprising: a call type judgment step in which the video-phone call control device judges, when a call request is made to the cellular phone, whether the call request is for a video-phone call; a communication status judgment step in which the video-phone call control device judges whether the cellular phone is performing packet communications; an adding step in which the video-phone call control device adds call information to the effect that the call request is for a video-phone call to the incoming call signal pertaining to the call request transmitted to the cellular phone when judgment is made in the call type judgment step that the call request is for a video-phone call and when judgment is made in the communication status judgment step that the cellular phone is performing packet communications; an incoming call signal reception step in which the cellular phone receives an incoming call signal pertaining to a call request to the cellular phone itself; a reporting step in which the cellular phone judges, when the cellular phone is performing packet communications, whether the call information has been added to the incoming call signal received in the incoming call signal reception step and for reporting that there is an incoming video-phone call in cases where the call information has been added; and a connection establishment step in which the cellular phone accepts an input to the effect that a video-phone call that corresponds with the report of the reporting step is to be connected and establishing a connection for the video-phone call by disconnecting the packet communications in accordance with the input.

According to the present invention, in cases where there is an incoming video-phone call while the cellular phone is performing packet communications, processing for the arrival of the video-phone call can be executed without disconnecting the packet communications and, in cases where there is an input to the effect that there is an incoming call for the video-phone call, packet communications are disconnected to establish a connection for the video-phone call. Hence, a video-phone call can be established even when there is an incoming video-phone call during packet communications.

### BRIEF DESCRIPTION OF THE DRAWINGS

Fig. 1 shows the constitution of a cellular phone system according to an embodiment of the present invention, and an MMS and cellular phone that are contained in the cellular phone system;
Fig. 2 shows the hardware constitution of the MMS of the embodiment of the present invention;
Fig. 3 shows the hardware constitution of the cellular phone of the embodiment of the present invention;
Fig. 4 is a sequence diagram showing processing (a video-phone call control method) that is executed by the cellular phone system (cellular phone network and cellular phone) of the embodiment of the present invention;
Fig. 5 shows screen transitions of the cellular phone of the embodiment of the present invention;
Fig. 6 is a sequence diagram that shows another example of processing (a video-phone call control method) that is executed by the cellular phone system (cellular phone network and cellular phone) of the embodiment of the present invention; and
Fig. 7 is a sequence diagram showing another example of the processing (a video-phone call control method) that is executed by the cellular phone system (cellular phone network and cellular phone) of the embodiment of the present invention.

### DESCRIPTION OF THE PREFERRED EMBODIMENTS

Preferred embodiments of the cellular phone system, video-phone call control device, cellular phone, and video-phone call control method according to the present invention will be described in detail hereinbelow with reference to the drawings. The same reference numerals are assigned to the same elements in the description of the drawings and repetition in the description is thus avoided.

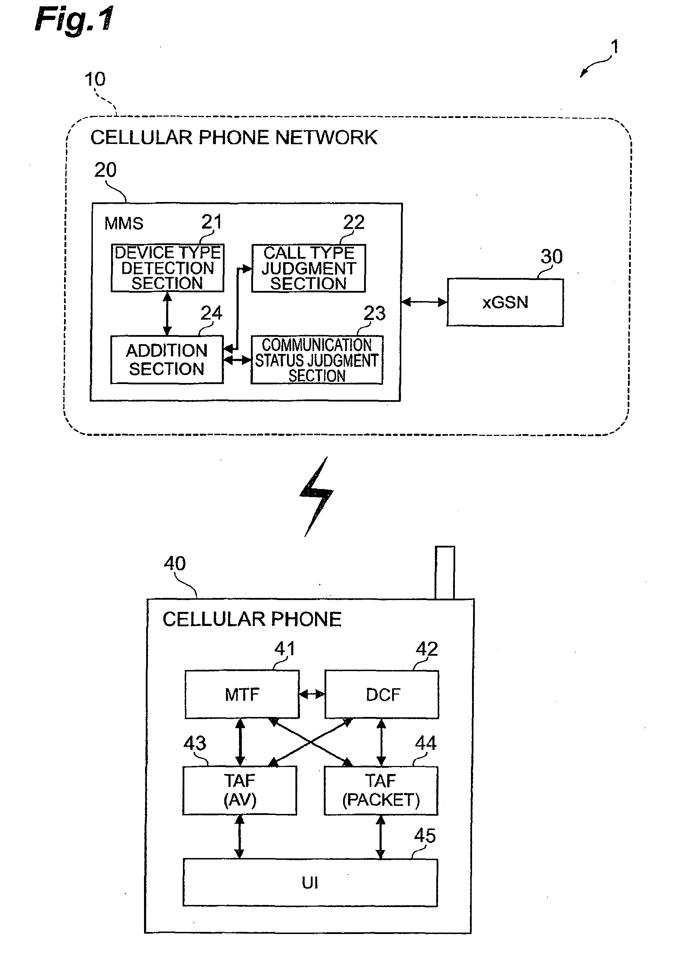

Fig. 1 shows a cellular phone system 1 according to this embodiment. The cellular phone system 1 contains a cellular phone network 10, and a cellular phone 40 according to this embodiment. The cellular phone network 10 is the connection target of the cellular phone 40 and is a mobile communication network that provides cellular phone services to the cellular phone 40. Cellular phone services provided by the cellular phone network 10 include voice calls, packet communications and video-phone calls. As shown in Fig. 1, the cellular phone network 10 is constituted comprising an MMS (Mobile Multimedia Switching Center) 20 which is also a video-phone call control device according to this embodiment and an xGSN (GPRS Support Node) 30. Further, although not shown, the cellular phone network 10 also includes a wireless network control device and a base station which serve to provide cellular phone services.

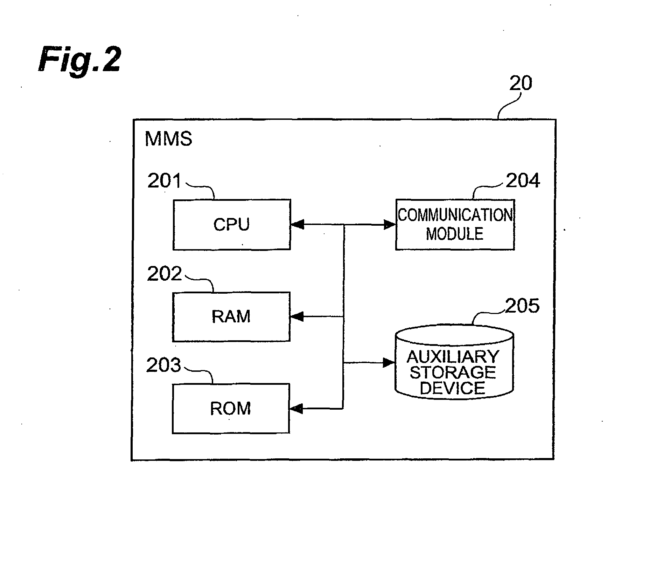

The MMS 20 is a switching device that performs processing to establish a connection between an outgoing call terminal and an incoming call terminal by receiving a call signal from a cellular phone which is an outgoing call terminal and transmitting an incoming call signal to the cellular phone 40 which is the incoming call terminal for this call request. Connections that are established by the MMS 20 include video-phone call connections in addition to voice call connections. As shown in Fig. 2, the MMS 20 is constituted as a computer that comprises hardware such as a CPU (Central Processing Unit) 201, a RAM (Random Access Memory) 202 and ROM (Read Only Memory) 203 which are primary storage devices, a communication module 204 for performing communications, and an auxiliary storage device 205 such as a hard disk. As a result of the operation of such constituent elements, the MMS 20 exhibits the original MMS functions as well as the functions of a video-phone call control device (described subsequently).

As shown in Fig. 1, the MMS 20 is constituted comprising, as video-phone call control devices, a device type detection section 21, a call type judgment section 22, a communication status judgment section 23, and an addition section 24. Further, although not shown, the MMS 20 has a function section for the purpose of realizing the original MMS functions in addition to those mentioned hereinabove.

The device type detection section 21 is device-type detection means for detecting the device type of the cellular phone 40 which is an incoming call terminal when the MMS 20 receives an outgoing call signal from a cellular phone which is the outgoing call terminal. Information on the device type of the cellular phone 40 connected to the cellular phone network 10 is held by the cellular phone network 10 beforehand. The device type detection section 21 detects the device type of the cellular phone 40 which is the incoming call terminal by acquiring information specifying the incoming call terminal from the received call signal and referencing the device type information. Information on the detected device type is reported to the addition section 24. The detection of the device type performs the processing according to the present invention only when the incoming call terminal is a device type which corresponds with the functions of the present invention. However, in cases where all of the cellular phones connected to the cellular phone network 10 are able to execute the processing according to the present invention, the device type detection section 21 is not necessarily required.

The call type judgment section 22 is call type judgment means for judging whether the call request is for a video-phone call when a call request is made to the cellular phone 40. The call type judgment section 22 performs the above judgment by acquiring information showing the type of communications assigned to the call signal when the MMS 20 receives a call signal from the cellular phone which is an outgoing call terminal. Information for the decision regarding whether the call request is a video-phone call that is judged by the call type judgment section 22 is reported to the addition section 24.

The communication status judgment section 23 is communication judgment means for judging whether the cellular phone 40 is performing packet communication when a call request is made to the cellular phone 40. In addition, the communication status judgment section 23 detects the type of packet communications when the cellular phone 40 is performing packet communications. The types of packet communications are types of communications used for normal Web access, client authentication service-equipped communications, communications allowing the user to change the settings (custom control communication), communication for downloading software (pattern files of antivirus software) and PoC (Push-to-Talk over Cellular) communications, for example, these types being classified according to the content of the packets and the access destination and so forth. The judgment of whether packet communication is in progress and the detection of the connection destination for the packet communication are carried out by issuing an inquiry to the xGSN 30. The information on the judgment of whether packet communications are being carried out and information on the detected type of packet communication are reported to the addition section 24.

The addition section 24 is adding means for adding call information to the effect that the call request is for a video-phone call to the incoming call signal (SETUP) that relates to a call request that is transmitted to the cellular phone 40 which is the incoming call terminal based on the information reported by the device type detection section 21, call type judgment section 22 and communication status judgment section 23. More specifically, it is judged by the call type judgment section 22 that the call request is for a video-phone call and call information is added when it is judged by the communication status judgment section 23 that the cellular phone 40 is performing packet communications.

In cases where the device type detected by the device type detection section 21 is a specified device type, call information is not added. Information on device types to which call information has been added or information on device types to which call information has not been added are set by the operator and held beforehand by the addition section 24. More specifically, settings are made so that call information is added to an incoming call signal to device types corresponding with the functions of the present invention and call information is not added to an incoming call signal to device types not corresponding with the functions of the present invention.

Furthermore, in cases where the type of packet communications detected by the communication status judgment section 23 is a specified type, call information is not added to the incoming call signal. Information on the communication types for which call information is added to the incoming call signal and information on communication types for which call information is not added are set by the operator and held beforehand by the addition section 24. More specifically, settings are made so that call information is not added to an incoming call signal that is transmitted to the cellular phone 40 when packet communications of a type for which packet communications are preferably not interrupted (by an incoming video-phone call) are being performed. For example, settings are made so that call information is not added in cases where the cellular phone 40 is performing communications to download software or communication used for PoC (Push-to-Talk over Cellular).

As call information, a signal IE as prescribed by 3GPP (3^{rd} Generation Partnership Project) can specifically be used. The signal IE is a signal that is contained in the incoming call signal (SETUP) in order to produce a report sound in the event of an incoming call pertaining to another second call when a first call has been established by the cellular phone; signal IE can be used as call information as per this embodiment. Signal IE, which is also employed as call information, preferably also contains 'dial tone on'. Thus, by using a conventional signal as call information, there is no need to generate a new signal and the present invention can be easily and reliably implemented.

xGSN (GPRS Support Node) 30 is a node that provides the cellular phone with a packet communication function. More specifically, the xGSN 30 establishes a bearer that is used for packet communications and establishes a packet call and so forth. The xGSN (GPRS Support Node) 30 holds information specifying the cellular phone 40 that is performing packet communications and information on the type of packet communication (APN (Access Point Name), for example) and reports the content to the MMS 20 in accordance with an inquiry from the MMS 20. The cellular phone network 10 as well as the MMS 20 and xGSN 30 contained in the cellular phone network 10 were described hereinabove.

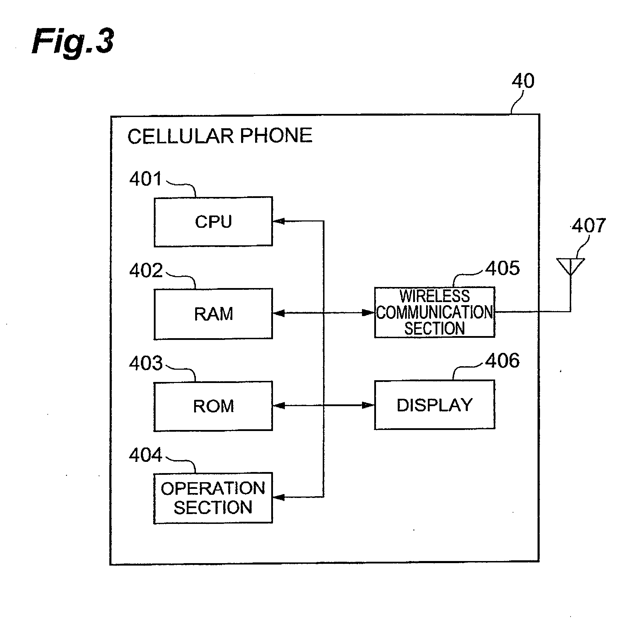

Subsequently, the cellular phone 40 will be described. The cellular phone 40 is connected to the cellular phone network 10 in accordance with the mobile communications and is a device for performing a cellular phone call. Further, the cellular phone 40 has a voice call function, a video-phone call function, and a packet communication function. Fig. 1 shows only one cellular phone 40 but the cellular phone system 1 contains a multiplicity of cellular phones. However, these cellular phones need not be the cellular phone 40 according to this embodiment (having the functions of the present invention). In addition, the cellular phone 40 according to this embodiment is a device having features in the event of an incoming video-phone call and is therefore an incoming call terminal (naturally, an outgoing call is also possible for the device). Fig. 3 shows the hardware constitution of the cellular phone 40. As shown in Fig. 3, the cellular phone 40 is constituted by hardware such as the CPU 401, RAM 402, ROM 403, operation section 404, a wireless communication section 405, a display 406, and an antenna 407. Each of the following functions is exhibited as a result of the operation of these constituent elements.

As shown in Fig. 1, the cellular phone 40 is constituted comprising an MTF (Mobile Terminal Function) 41, a DCF (Device Control Function) 42, a TAF (Terminal Adaptation Function (AV) 43, a TAF (packet) 44, and a UI (User Interface) 45. Further, the cellular phone 40 also comprises a TAF that is used for a voice call but a description of a TAF used for a voice call is omitted because such a description is not related to the functions of the present invention.

The MTF 41 is a transmission/reception control section that performs control in order to establish a connection with the cellular phone network 10 by controlling the transmission and receipt of control data that are exchanged with the cellular phone network 10 when communication such as a video-phone call or packet communication is started. The MTF 41 bears one function of the connection establishment means for establishing a connection for a video-phone call by cutting packet communication when there is an instruction from the TAF (AV) 43 during packet communications. The control to establish a connection includes processing to establish a radio bearer (RAB) which serves as a transmission path for the communication data to and from the cellular phone network 10. In addition, the MTF 41 controls the transmission and reception of communication data. In other words, the MTF 41 is reception signal receiving means for receiving an incoming call signal pertaining to a call request to the MTF 41 itself. The MTF 41 sends and receives information as required between the DCF 42, TAF (AV) 43, and TAF (packet) 44. This is detailed specifically in the description of the processing of the cellular phone 40.

The DCF 42 is a common setting information management section that holds information for increasing convenience and the information required to use cellular phone functions such as telephone book information and user information. The DCF 42 holds information pertaining to compatibility when an incoming call signal pertaining to an outgoing video-phone call is received during packet communications as information pertaining to the present invention. More specifically, any of four information items, namely, 'video-phone call priority', 'packet communication priority', 'answerphone', and 'transfer phone' is set. These settings are made beforehand by the user of the cellular phone 40. The 'video-phone call priority' is a setting that allows a video-phone call to be established even when packet communication is in progress (corresponds to a video-phone call during packet communication). 'Packet communication priority' is a setting that establishes a video-phone call (does not correspond to a telephone call during packet communication). 'Answerphone' is a setting that connects the video-phone call to an answerphone (on the cellular phone network 10). 'Transfer call' is a setting that transfers a video-phone call. The processing in cases where each of these settings is made will be described subsequently.

Furthermore, the DCF 42 is reporting means that judges whether call information (signal IE) is contained in the incoming call signal (SETUP) received by the MTF 41 when the DCF 42 itself is performing packet communications and reports the fact that there is an incoming video-phone call to the user of the cellular phone 40 when call information is indeed contained in the incoming call signal (SETUP). This act of reporting is such that an indication is provided that a report is to be made by the DCF 42 to the TAF (AV) 43 and is performed as a result of an instruction to the UI 45 by the TAF (AV) 43. As mentioned subsequently, this reporting is performed only when the setting was 'video-phone call priority'.

The TAF (AV) 43 is a data processing section for processing video-phone call data that are sent and received by the MTF 41 via a radio bearer that is used for an established video-phone call. Pertinent video-phone call data processing is processing that converts video-phone call data before outputting the result to the UI 45 as voice or video data and processing that converts the voice or video data input from the UI 45 to video-phone call data before outputting the result to the MTF 41 for transmission to the cellular phone network 10, for example.

In addition, as mentioned earlier, the TAF (AV) 43 performs one function of the reporting means which, in the event of an incoming video-phone call during packet communications, outputs a report to that effect to the UI 45. Furthermore, the TAF (AV) 43 receives information from the UI 45 to the effect that a video-phone call input by the user to the UI 45 in accordance with the above output is to be connected and issues an instruction to the MTF 41 to establish a connection for the video-phone call by cutting packet communications. In other words, the TAF (AV) 43 bears one function of the connection establishment means.

The TAF (packet) 44 is a data processing section for processing packet communication data that are sent and received by the MTF 41 in accordance with the wireless bearer used for established packet communication.

The UI 45 is a part that makes outputs to the user of the cellular phone 40 and receives inputs from the user. More specifically, in the event of a video-phone call, the UI 45 outputs voice and video output by the TAF (AV) 43 to the speaker and display that the cellular phone 40 comprises. Further, the UI 45 accepts inputs of voice and video (from the mask and camera that the cellular phone 40 comprises) and makes inputs to the TAF (AV) 43. In addition, in cases where an incoming call signal pertaining to a video-phone call is received during packet communications, the UI 45 receives an instruction from the TAF (AV) 43 and outputs this fact to report same to the user. In other words, the UI 45 bears a function of reporting means for reporting the fact that there is an incoming video-phone call during packet communications. This reporting is, more specifically, performed by sounding a ring tone and displaying the fact that there is an incoming video-phone call on the display.

Furthermore, when the UI 45 issues the above report, a state of awaiting an input from the user with regard to whether the user is going to answer the video-phone call is then assumed. The input from the user is made by pushing a predetermined button (off hook button, for example) on the operating section of the cellular phone 40, for example. When an input is made by the user, the UI 45 accepts this input and reports this fact to the TAF (AV) 43. In other words, the UI 45 bears one function of the connection establishment means that establishes a connection for a video-phone call by accepting an input from the user to the effect that there is an incoming video-phone call that corresponds with the reporting and cutting packet communications in accordance with the input. The description above is for the cellular phone 40.

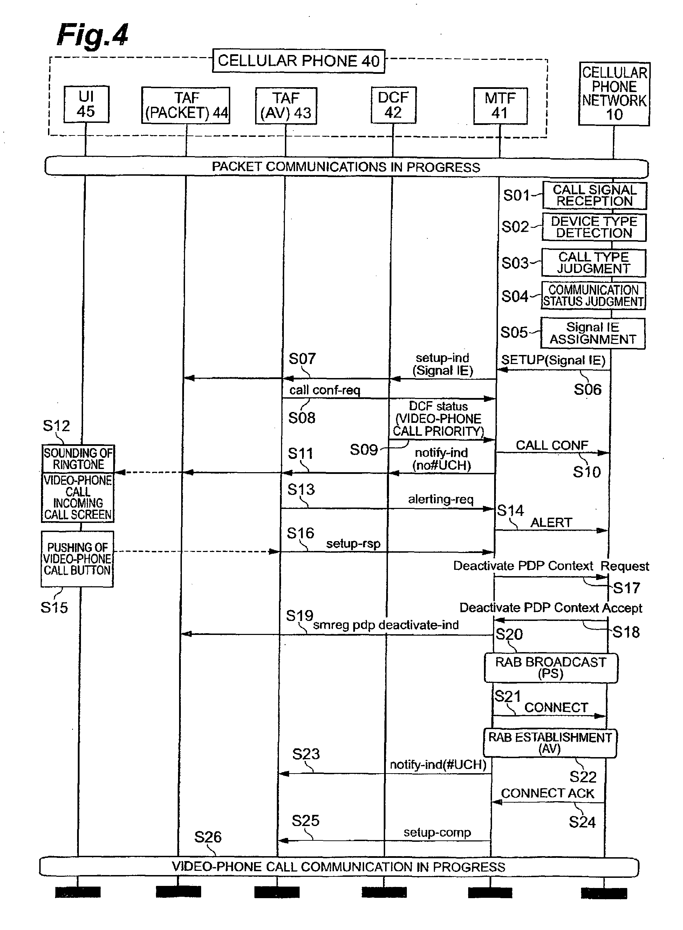

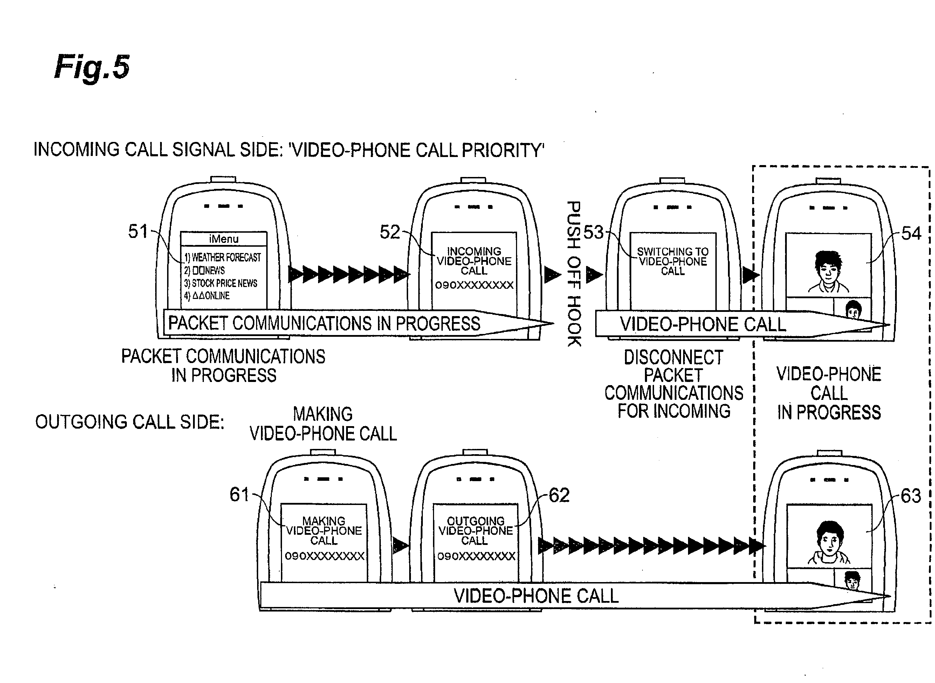

A description follows of the processing (video-phone call control method) that is executed by a cellular phone system 1 (cellular phone network 10 and cellular phone 40) according to this embodiment by using the flowcharts of Figs. 4, 6, and 7 and the screen transitions of Fig. 5. This processing is performed when a call request for a video-phone call is issued to the cellular phone 40 by another cellular phone (outgoing call terminal) when the cellular phone 40 is performing packet communications. Further, the packet communications of the cellular phone 40 are performed after a radio bearer which is used for packet communication has been established. The cellular phone 40 is unable to establish a connection for a video-phone call unless the radio bearer used for the packet communications is disconnected. First, the processing for a case where the setting of the DCF 42 is 'video-phone call priority' will be described by using the flowchart of Fig. 4 and the screen transitions of Fig. 5.

Because the cellular phone 40 is performing packet communications, a display that corresponds with Web access as shown on screen 51 in Fig. 5, for example, is created. The processing involves a call signal for a video-phone call to the cellular phone 40 being first transmitted by the outgoing call terminal to the cellular phone network 10. When an outgoing call is made, the outgoing call terminal displays this fact as shown on screen 61 of Fig. 5. The cellular phone network 10 receives the call signal from the MMS 20 (S01). Thereafter, the MMS 20 acquires information specifying the cellular phone 40 which is the incoming call destination from the call signal (the telephone number, for example) by means of the device type detection section 21, whereupon the device type of the cellular phone 40 is detected based on this information (S02, device type detection step). The information on the detected device type of the cellular phone 40 which is the incoming call terminal is then reported to the addition section 24.

Thereafter, the call type judgment section 22 judges whether the incoming call signal is for a television call (S03, call type judgment step). The information on the result of the judgment by the call type judgment section 22 is reported to the addition section 24. The communication status judgment section 23 then judges whether the cellular phone 40 is performing packet communications (S04, communication status judgment step). Further, the type of packet communications is also detected when the cellular phone 40 is also performing packet communications. The judgment and detection are performed as a result of acquiring information specifying the cellular phone 40 which is the incoming call destination from the call signal (the telephone number, for example) and transmitting this information as an inquiry to the xGSN 30. The information on the result of the judgment and detection is then reported to the addition section 24. Further, in cases where the device type detected in S02 is set by the addition section 24 when signal IE is not added, control is possible to prevent an inquiry to the xGSN.

Thereafter, it is judged, based on information reported by the device type detection section 21, call type judgment section 22, and communication status judgment section 23, whether a signal IE which is call information to the effect that the call request is for a video-phone call has been assigned by the addition section 24 to SETUP which is an incoming call signal pertaining to a call request transmitted to the cellular phone 40 which is the incoming call terminal. As mentioned earlier, in cases where the call request is for a video-phone call and it is judged that the cellular phone 40 is performing packet communication, it is judged that the signal IE has been added to SETUP. However, it is judged that signal IE has not been added to SETUP in cases where the device type of the cellular phone 40 is set when the signal IE is not added (or when the device type is a device type other than the one that is set when signal IE is added) or in cases where the type of packet communications is set when signal IE is not added (or when the type of communication is a communication type other than the one set when signal IE is added). Signal IE is added to SETUP by the addition section 24 based on this judgment (S05, adding step).

Thereafter, SETUP, to which signal IE has been added by the addition section 24, is transmitted by the MMS 20 to the cellular phone 40. In the cellular phone 40, the MTF 41 receives SETUP to which signal IE has been added (S06, incoming call signal reception step). In cases where a signal IE has not been added to SETUP in S05, the cellular phone 40 performs processing in which a video-phone call connection is not established while packet communications remains interrupted (a report or the like is not sent to the user) as per a conventional cellular phone. In other words, in this case, an incoming video-phone call is rejected by the cellular phone 40.

Thereafter, the receipt of SETUP is reported by the MTF 41 to the DCF 42, TAF (AV) 43, and TAF (packet) 44 (setup-ind(signal IE) is transmitted) (S07). A signal to the effect that a video-phone call connection can be established (call conf-req) is transmitted by the TAF (AV) 43 to the MTF 41 (S08). Meanwhile, it is judged by the DCF 42 whether signal IE has been added to SETUP, and it is in turn judged whether the call request is related to a video-phone call. In cases where signal IE has been assigned to SETUP, setting information on the compatibility of the incoming video-phone call during packet communications is reported by the DCF 42 to the MTF 41. In this processing example, the fact that the setting information is 'video-phone call priority' is reported (the DCF status is transmitted) (S09, reporting step).

Thereafter, upon receipt of the signal transmitted by the TAF (AV) 43 in S08, a signal (CALL CONF) to the effect that a video-phone call connection is established is transmitted by the MTF 41 to the cellular phone network 10 (S10). In addition, an instruction to establish a video-phone call (transmission of notify-ind(no#UCH)) is issued by the MTF 41 to the DCF 42, TAF (AV) 43, and TAF (packet) 44 upon receipt of a report from the DCF 42 in S09. Thereafter, an instruction to sound a ring tone and form a display on the incoming call screen to the effect that there is an incoming video-phone call is issued by the TAF (AV) 43 to the UI 45 upon receipt of an instruction from the MTF 41 (S11, reporting step). The sounding of the ring tone and display on the incoming call screen are then executed by the UI 45 in accordance with an instruction from the TAF (AV) 43 and the fact that a video-phone call has arrived is reported to the user (S12, reporting step). For example, as shown on the screen 52 of Fig. 5, the phone number of the outgoing call terminal and the text 'receiving video-phone call' are displayed as shown on the screen 52 in Fig. 5. Here, the UI 45 assumes a state of awaiting an input which involves the user pushing the off hook button. Processing to connect to an answerphone or transfer processing is carried out as per processing for a case where the cellular phone 40 is preset to connect or transfer an incoming video-phone call (irrespective of whether the cellular phone 40 is performing packet communications) or a case where there is an operation to that end by the user at the point where the video-phone call arrives, or for a case in which the setting of the DCF 42 is 'answerphone call' or 'transfer call' which will be described hereinbelow.

However, a report to transmit a request to emit a sound (ringback tone) indicating that a call has been made by the incoming call terminal to the outgoing call terminal is issued by the TAF (AV) 43 to the MTF 41 (alerting -req) (S13). A request (ALERT) to sound the ringback tone is transmitted to the cellular phone network 10 by the MTF 41 that issued the report (S14). The ringback tone is emitted from the outgoing call terminal by means of the cellular phone network 10. Further, as shown on screen 62 of Fig. 5, a screen display to the effect that the outgoing call terminal is calling is created (the telephone number of the incoming call terminal is also displayed. A name is also displayed if one is registered in the phone book of the cellular phone 40).

Thereafter, when the off hook button on the cellular phone 40 is pushed by the user, the input is accepted by the UI 45 (S 15, establishment step). When the input is made, as will be explained subsequently, processing to establish the video-phone call is performed by disconnecting packet communications. During this processing, the display of the cellular phone 40 is a display indicating a connection to the video-phone call as shown on screen 53 of Fig. 5, for example. The input from the user is reported to the TAF (AV) 43 by the UI 45. Thereafter, an instruction to establish a video-phone call by disconnecting packet communications is issued by the TAF (AV) 43 to the MTF 41 (transmission of setup-rsp) (S16, establishment step).

A signal (Deactivate PDP Context Request) to break the connection for packet communications is transmitted by the MTF 41 that receives the instruction to the cellular phone network 10 (S17, establishment step). The cellular phone network 10 performs processing to break the connection of the packet communication and a signal constituting a response to the disconnect signal (Deactivate PDP Context Accept) is then transmitted to the cellular phone 40 (S18). The signal is received by the MTF 41 and the disconnection of the packet communications is reported to the TAF (packet) 44 that is controlling the packet communications (transmission of smreg pdp deactivate-ind) (S19, establishment step). Thereafter, processing to open the radio bearer used for packet communications is performed between the MTF 41 and cellular phone network 10 (S20, establishment step).

Thereafter, processing to establish a video-phone call connection is exercised by the MTF 41. First, a request to establish a video-phone call connection is made by the MTF 41 to the cellular phone network 10 (CONNECT transmission) (S21, establishment step). Processing to establish a radio bearer that is used for a video-phone call is then performed between the MTF 41 and the cellular phone network 10 (S22, establishment step). Thereafter, an instruction to perform settings for making a video-phone call is sent by the MTF 41 to the TAF (AV) 43 (transmission of notify-ind (#UCH)) and these settings are made for the TAF (AV) 43 (S23, establishment step). Thereafter, a response to the request to establish a video-phone call connection (CONNECTION ACK) is transmitted by the cellular phone network 10 to the cellular phone 40 when the video-phone call connection is established (S24). The cellular phone 40 receives the response from the MTF 41 and a report that the processing to connect to the TAF (AV) 43 that controls the video-phone call is complete is performed (transmission of setup-comp) (S25). As a result of the above processing, a connection for a video-phone call is established and a video-phone call is made (S26). As shown on screens 54 and 63 of Fig. 5, the display of the outgoing call terminal and cellular phone 40 which is the incoming call terminal is a display indicating that a video-phone call is in progress. Thus, if the setting 'video-phone call priority' is made beforehand, it is possible to deal with an incoming video-phone call even when packet communication is in progress.

In cases where there has been no input from the user (in which the user pushes the off hook button) or there has been an input to the effect that a video-phone call is not connected when the UI 45 is in a state of awaiting an input from the user according to S12, processing in a case where a video-phone call is not established is performed while maintaining the packet communication connection. In other words, when a video-phone call is not established, the packet communication connection is maintained without being broken. The above is processing for a case where the setting of the DCF 42 was 'video-phone call priority'.

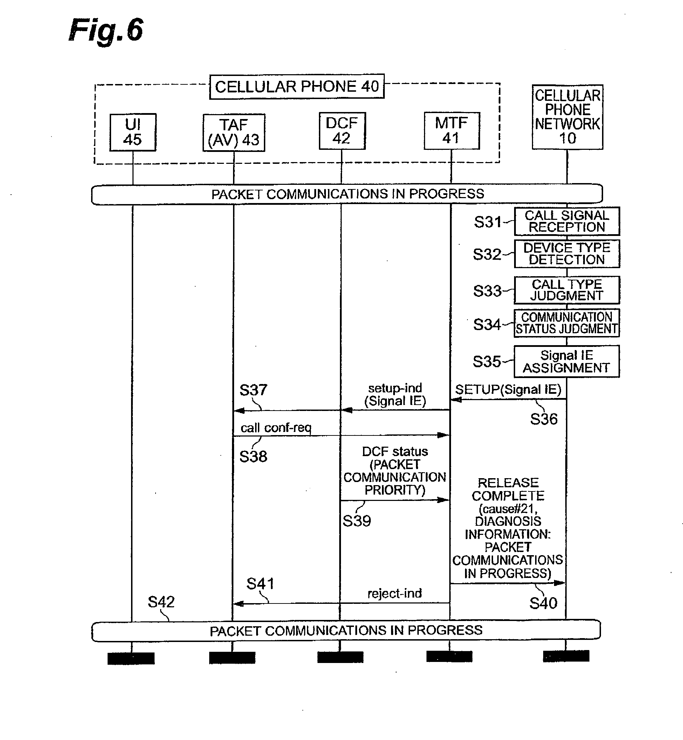

Thereafter, processing for a case where the setting of the DCF 42 was 'packet communication priority' will be described by using the sequence diagram of Fig. 6. The processing (S31 to S38) from the video-phone call request from the outgoing call terminal up until the transmission of the signal (call conf-req) to the effect that a video-phone call connection can be established from the TAF (AV) 43 to the MTF 41 is the same as the processing for the above case where the information was 'video-phone call priority' (S01 to S08). Further, in Fig. 6, the TAF (packet) 44 has been omitted because it is not required for the description.

In the processing for a case where the setting for the DCF 42 was 'packet communication priority', it is judged by the DCF 42 whether the call request pertains to a video-phone call as a result of judging whether the signal IE has been added to the SETUP. In cases where signal IE has been added to SETUP, setting information for compatibility with an incoming video-phone call during packet communication is reported by the DCF 42 to the MTF 41. In this processing example, the 'packet communication priority' is reported (DCF status (packet communication priority) is transmitted) (S39, reporting step):

Thereafter, because the reported setting is 'packet communication priority', processing to not establish a video-phone call connection is performed by the MTF 41. More specifically, a signal to the effect that the cellular phone 40 is performing packet communications and a video-phone call is not to be established (RELEASE COMPLETE (causee#21, diagnosis information: packet communications in progress) to the cellular phone network 10 is transmitted by the MTF 41 (S40). Further, a report to the effect that a video-phone call is not to be connected is issued by the MTF 41 to the TAF (AV) 43 (transmission of reject-ind) (S41). Heretofore, processing so that a video-phone call connection is not established ends and a state where the cellular phone 40 is performing packet communications is maintained (S42). Further, in the processing to not establish a video-phone call connection, a report is not issued to the user and there is no effect on the established packet communications. The packet communications are therefore not interrupted. Thus, if the setting 'packet communication priority' is made beforehand, an incoming video-phone call can be rejected even when the functions of the present invention are used. The above processing is processing for a case where the setting of the DCF 42 was 'packet communication priority' .

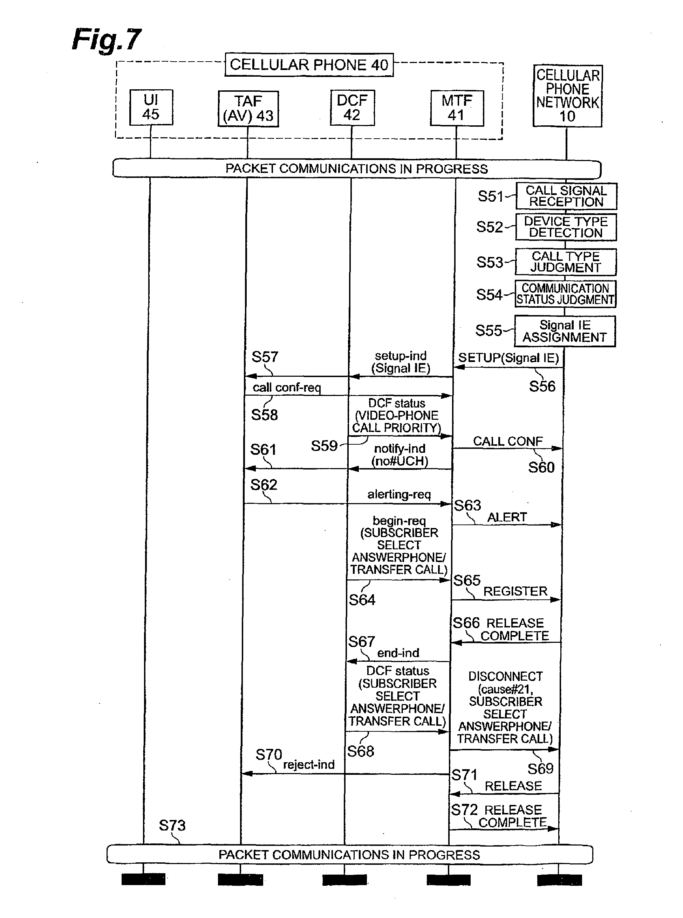

Thereafter, processing for a case where the setting of the DCF 42 was 'answerphone' or 'transfer call' will be described by using the sequence diagram of Fig. 7. The processing (S51 to S58) from the video-phone call request from the outgoing call terminal to the transmission of the signal to the effect that a video-phone call can be established (call conf-req) by the TAF (AV) 43 to the MTF 41 is the same as the processing of the processing for the case where the setting 'video-phone call priority' is made (S01 to S08). Further, in Fig. 7, TAF (packet) 44 is omitted because same is not required in the description.

In the processing for a case where the setting of the DCF 42 is 'answerphone' or 'transfer call', it is judged by the DCF 42 whether the call request pertains to a video-phone call as a result of judging whether signal IE has been added to SETUP. In cases where signal IE has been added to SETUP, setting information on the compatibility of the incoming video-phone call during packet communications is reported by the DCF 42 to the MTF 41. In this processing example, the fact that the setting 'video-phone call priority' has been made is first provisionally reported (DCF status (video-phone call priority) is transmitted) (S59, reporting step).

Thereafter, the signal transmitted by the TAF (AV) 43 in S58 is received and a signal (CALL CONF) to the effect that it is possible to establish a video-phone call connection is transmitted by the MTF 41 to the cellular phone network 10 (S60). Furthermore, an instruction to establish a video-phone call is made by the MTF 41 to the DCF 42 and TAF (AV) 43 upon receiving the report from the DCF 42 in S59 (transmission of notify-ind(no#UCH))(S61, reporting step).

Thereafter, a report is made by the TAF (AV) 43 to the MTF 41 to transmit a request to emit a sound (ringback tone) indicating that a call is being made by the outgoing call terminal to the incoming call terminal (alerting -req) (S62). A request (ALERT) that emits a ring tone is transmitted by the MTF 41 that issued the report to the cellular phone network 10 (S63). A ringback tone is emitted by the cellular phone network 10 via the outgoing call terminal.

Thereafter, a signal for performing answerphone or transfer call processing is transmitted in accordance with the settings by the DCF 42 to the MTF 41 (begin-req (subscriber selection answerphone call/transfer call)) (S64, reporting step). A signal confirming whether the user of the cellular phone 40 is able to utilize an answerphone or transfer call (whether an answerphone or transfer call contract is in place) is transmitted by the MTF 41 that receives the above signal to the cellular phone network 10 (S65, reporting step). Thereafter, information on whether an answerphone or transfer call can be utilized (RELEASE COMPLETE) is transmitted by the cellular phone network 10 that receives this signal to the cellular phone 40 (S66). In the cellular phone 40, the information is received by the MTF 41 and then reported to the DCF 42 (S67, reporting step).

In cases where an answerphone or transfer call can be utilized, the fact that an incoming call signal is being transferred from the DCF 42 to the MTF 41 or connected to the answerphone is reported to the MTF 41 (the DCF status (subscriber selection answerphone/transfer call) is transmitted) (S68, reporting step). A signal to that effect (DISCONNECT (cause#21, subscriber selection answerphone/transfer call) is transmitted by the MTF 41 that received the report to the cellular phone network 10 (S69, reporting step). In the cellular phone network 10, processing to transfer the incoming call or connect to the answerphone is performed in accordance with the signal. In addition, a report to the effect that a video-phone call is not connected is made by the MTF 41 to the TAF (AV) 43 (reject-ind transmission) (S70).

Thereafter, a signal to end processing related to an incoming video-phone call is sent and received between the MTF 41 and cellular phone network 10 (transmission and reception of RELEASE AND RELEASE COMPLETE) (S71, S72). The processing above for transferring an incoming call or connecting to the answerphone ends and the state in which the cellular phone 40 is performing packet communications is maintained (S73). In this processing, a report is not sent to the user and there is no effect on the established packet communications. Hence, packet communications are not interrupted. Because the cellular phone 40 receives an incoming call signal, the fact that there was an incoming video-phone call remains in the incoming call history of the cellular phone 40.

In step S66, in cases where there is a response to the effect that an answerphone or transfer call cannot be utilized is sent by the cellular phone network 10 to the cellular phone 40, as per a case where the set ting is 'packet communication priority', the fact that the setting is 'packet communication priority' is reported by the DCF 42 to the MTF 41 (the DCF status (packet communication priority) is transmitted) and processing to reject the incoming call is executed. The above processing is processing for a case where the setting of the DCF 42 is `answerphone' or 'transfer call'.

As mentioned above, according to this embodiment, a video-phone call can be established even when there is an incoming video-phone call during packet communications by identifying that the call request to the cellular phone 40 pertains to a video-phone call (using a method that differs from the usually prescribed method) by adding call information (signal IE) to the incoming call signal (SETUP). Further, with the usually prescribed method, unlike that of this embodiment, if packet communications are disconnected, it is not possible to deal with a video-phone call. Packet communications cannot be continued even when no connection is made to the video-phone call.

In order to easily and reliably implement the present invention, the call information is desirably the signal IE but signal IE need not necessarily be used. The incoming call signal may also be identified as pertaining to the call request of the video-phone call.

Furthermore, as per this embodiment, interruption of the packet communications due to an incoming video-phone call can be prevented as long as a setting is made beforehand to indicate whether to deal with video-phone calls during packet communications.

In the MMS 20, if call information (signal IE) is added in accordance with the type of packet communications performed by the cellular phone 40, because an incoming call is rejected without a report as per the prior art if call information has not been added, interruption of packet communications can be prevented in accordance with the type. In the MMS 20, as long as call information (signal IE) is added in accordance with the device type of the cellular phone 40, processing can be executed only with respect to the cellular phone 40 that corresponds with the functions of the present invention.

## Claims

1. A cellular phone system constituted including: a cellular phone having a video-phone call function and a packet communication function; and a video-phone call control device contained in a cellular phone network which is a connection target of the cellular phone, wherein
the video-phone call control device comprises:
call type judgment means for judging, when a call request is made to the cellular phone, whether the call request is for a video-phone call;
communication status judgment means for judging whether the cellular phone is performing packet communications; and
adding means for adding call information to the effect that the call request is for a video-phone call to an incoming call signal pertaining to the call request transmitted to the cellular phone when judgment is made by the call type judgment means that the call request is for a video-phone call and when judgment is made by the communication status judgment means that the cellular phone is performing packet communications; and
the cellular phone comprises:
incoming call signal receiving means for receiving an incoming call signal pertaining to a call request to the cellular phone itself;
reporting means for judging, when the cellular phone is performing packet communications, whether the call information has been added to the incoming call signal received by the incoming call signal receiving means and for reporting that there is an incoming video-phone call in cases where the call information has been added; and
connection establishment means for accepting an input to the effect that a video-phone call that corresponds with the report issued by the reporting means is to be connected and establishing a connection for the video-phone call by disconnecting the packet communications in accordance with the input.

2. The cellular phone system according to claim 1, wherein the reporting means reports that there has been an incoming call when settings have been made beforehand to handle a video-phone call during packet communications.

3. The cellular phone system according to claim 1 or 2, wherein, in cases where settings have been made beforehand to transfer a video-phone call during packet communications or connect a video-phone call during packet communications to an answerphone, the reporting means transfers the incoming call signal or connects same to the answerphone.

4. The cellular phone system according to any one of claims 1 to 3, wherein
the communication status judgment means detects the type of the packet communications; and
the adding means judges whether to add the call information in accordance with the type detected by the communication status judgment means.

5. The cellular phone system according to any one of claims 1 to 4, wherein
the video-phone call control device further comprises device type detection means for detecting the device type of the cellular phone; and
the adding means judges whether to add the call information in accordance with the device type detected by the device type detection means.

6. The cellular phone system according to any one of claims 1 to 5, wherein the call information is a signal IE.

7. A video-phone call control device contained in a cellular phone network which is a connection target for a cellular phone having a video-phone call function and a packet communication function, comprising:
call type judgment means for judging, when a call request is made to the cellular phone, whether the call request is for a video-phone call;
communication status judgment means for judging whether the cellular phone is performing packet communications; and
adding means for adding call information to the effect that a call request is for a video-phone call to an incoming call signal pertaining to the call request which is transmitted to the cellular phone in cases where judgment is made by the call type judgment means that the call request is for a video-phone call and judgment is made by the communication status judgment means that the cellular phone is performing packet communications.

8. A cellular phone having a video-phone call function and a packet communication function, comprising:
incoming call signal receiving means for receiving an incoming call signal pertaining to a call request to the cellular phone itself;
reporting means for judging, when the cellular phone is performing packet communications, whether call information to the effect that the call request is for a video-phone call has been added to the incoming call signal received by the incoming call signal receiving means and for reporting that there is an incoming video-phone call in cases where the call information has been added; and
connection establishment means for accepting an input to the effect that a video-phone call that corresponds with the report issued by the reporting means is to be connected and establishing a connection for the video-phone call by disconnecting the packet communications in accordance with the input.

9. A video-phone call control method of a cellular phone system constituted including: a cellular phone having a video-phone call function; and a packet communication function and a video-phone call control device contained in a cellular phone network which is a connection target of the cellular phone, the method comprising:
a call type judgment step in which the video-phone call control device judges, when a call request is made to the cellular phone, whether the call request is for a video-phone call;
a communication status judgment step in which the video-phone call control device judges whether the cellular phone is performing packet communications;
an adding step in which the video-phone call control device adds call information to the effect that the call request is for a video-phone call to an incoming call signal pertaining to the call request transmitted to the cellular phone when judgment is made in the call type judgment step that the call request is for a video-phone call and when judgment is made in the communication status judgment step that the cellular phone is performing packet communications;
an incoming call signal reception step in which the cellular phone receives an incoming call signal pertaining to a call request to the cellular phone itself;
a reporting step in which the cellular phone judges, when the cellular phone is performing packet communications, whether the call information has been added to the incoming call signal received in the incoming call signal reception step and for reporting that there is an incoming video-phone call in cases where the call information has been added; and
a connection establishment step in which the cellular phone accepts an input to the effect that a video-phone call that corresponds with the report in the reporting step is to be connected and establishing a connection for the video-phone call by disconnecting the packet communications in accordance with the input.
